# EUROPÄISCHE PATENTSCHRIFT

(11) **EP 2 335 995 B1**
(45) Veröffentlichungstag und Bekanntmachung des Hinweises auf die Patenterteilung: **24.10.2012**
(21) Anmeldenummer: 09015791.8
(22) Anmeldetag: 21.12.2009
(51) Int. Cl.: B61D 17/22

(54) **Zwei Balgelemente aufweisender Doppelwellenbalg eines Übergangs zwischen zwei gelenkig miteinander verbundenen Fahrzeugen**
Double shaft gaiter comprising two gaiter elements for the intersection of two vehicles with a jointed connection
Double soufflet contenant deux éléments de soufflet d'un passage entre deux véhicules reliés de manière articulée

(43) Veröffentlichungstag der Anmeldung: 22.06.2011
(73) Patentinhaber: Hübner GmbH, 34123 Kassel (DE)
(72) Erfinder: Jünke, Volker, 34587 Felsberg (DE); Gerhold, Horst, 34466 Wolfhagen (DE)
(74) Vertreter: Walther, Walther & Hinz GbR

(56) Entgegenhaltungen:
- EP-A1- 0 293 051
- EP-A1- 2 082 942
- DE-A1- 2 817 739
- DE-U1- 9 202 851
- DE-U1-202009 008 164
- FR-A1- 2 613 306
- FR-A1- 2 865 984

## Beschreibung

Die vorliegende Erfindung betrifft einen zwei Balgelemente aufweisenden Doppelwellenbalg eines Übergangs zwischen zwei gelenkig miteinander verbundenen Fahrzeugen, umfassend einen Verbindungsrahmen zur Verbindung des Doppelwellenbalges mit der Stirnwand des Fahrzeugs, wobei der Verbindungsrahmen eine umlaufende, maulartige Öffnung zum klemmbaren Erfassen des einen ersten Balgelements aufweist.

Doppelwellenbälge sind aus dem Stand der Technik hinreichend bekannt. Beispielhaft sei hier auf das EP 0 252 221 B1 verwiesen, das einen solchen Doppelwellenbalg beschreibt.

Bekannt ist ebenfalls, einen solchen Doppelwellenbalg mittels eines umlaufenden Verbindungsrahmens mit der Stirnwand des Fahrzeugs oder Fahrzeugteilen zu verbinden. In diesem Zusammenhang sei darauf hingewiesen, dass der Doppelwellenbalg ein in sich geschlossenes rechteckiges Gebilde bildet, der als Teil des Übergangs die Übergangsbrücke und gegebenenfalls das Gelenk zwischen den beiden Fahrzeugen umspannt.

Der Verbindungsrahmen nach dem Stand der Technik zeichnet sich im Einzelnen dadurch aus, dass dieser eine umlaufende maulartige Öffnung aufweist, wobei durch die maulartige Öffnung die Stoffbahn des einen Balgelementes klemmbar erfasst wird. Zur Fixierung des anderen Balgelementes ist eine L-förmige gleichfalls umlaufende Leiste vorgesehen, die ebenfalls eine maulartige Öffnung zum klemmbaren Erfassen der Stoffbahn des anderen Balgelementes aufweist. Diese L-förmige Leiste besitzt im Bereich der maulartigen Öffnung einen Anlagesteg, der der Anlage an einer Anlagefläche des Verbindungsrahmens dient, wobei die Anlagefläche parallel zur Stirnwand des Fahrzeugs verläuft. Quer zur Anlagefläche weist die Leiste einen Befestigungsschenkel auf, der mehrere umfangsverteilt angeordnete Bohrungen zur Aufnahme von Schrauben zur Verbindung mit dem Verbindungsprofil zeigt. Hierzu besitzt das Verbindungsprofil auf seiner Stirnseite ebenfalls Bohrungen zur Aufnahme eines Gewindeansatzes zur Fixierung der in den Befestigungsschenkel eingedrehten Schrauben.

Wie bereits an anderer Stelle erläutert, laufen sowohl die Leiste als auch der Verbindungsrahmen parallel zur Stirnwand an der Stirnwand des Fahrzeugs um. Das heißt, sowohl die Leiste als auch der Verbindungsrahmen stellen sich als ein im Wesentlichen rechteckiges Gebilde dar, wobei sowohl die Leiste als auch das Verbindungsprofil parallel zur Stirnwand verlaufen. Nun ist es so, dass sowohl das Verbindungsprofil als auch die Leiste vor der Weiterverarbeitung gebogen werden, um die rechteckige Gestalt zu erhalten. Das heißt, dass sowohl die Leiste als auch der Verbindungsrahmen insbesondere vor der Anordnung von Bohrungen verteilt über den Umfang zur Aufnahme der Schrauben erst gebogen werden, um dann mit den Bohrungen für die Schrauben versehen zu werden, mit Hilfe dieser die Leiste an dem Verbindungsrahmen befestigt wird. Nachteilig hierbei ist, dass sowohl der Verbindungsrahmen als auch die Leiste im auf einem Werkzeugtisch liegenden Zustand gebohrt werden müssen. Da die Bohrungen für die Schrauben in beiden Fällen auf der Stirnseite angebracht werden müssen, ist es insofern erforderlich, dass die Bohrungen im liegenden Zustand sowohl des Verbindungsrahmens als auch der Leiste von der Seite, also horizontal, gebohrt werden müssen. Das heißt, der Bohrer muss parallel zur Oberfläche des Tisches geführt werden, da - wie bereits ausgeführt - beide Teile bei der Bearbeitung auf einem Tisch aufliegen müssen. Hierzu ist erforderlich, dass sowohl der Verbindungsrahmen als auch die Leiste eingespannt werden, um erst dann die entsprechenden Bohrungen vorzusehen. Auch ist erforderlich, dass die beiden Teile, d. h. sowohl der Verbindungsrahmen als auch die Leiste gemeinsam gebohrt werden, um sicherzustellen, dass die einzelnen Bohrungen auch miteinander fluchten. Die Anbringung der Bohrungen ist insofern äußerst kompliziert, zeitaufwendig und damit auch teuer.

Die der Erfindung zugrunde liegende Aufgabe besteht demzufolge darin, hier Abhilfe zu schaffen. Insbesondere soll das Bohren der Löcher für die Schrauben zur Verbindung von Verbindungsrahmen und Leiste erleichtert werden. Erleichtert werden soll auch die Montage der Leiste am Verbindungsrahmen.

Zur Lösung der Aufgabe wird bei einem Doppelwellenbalg der eingangs genannten Art vorgeschlagen, dass der Verbindungsrahmen eine parallel zur Stirnwand des Fahrzeugs oder Fahrzeugs verlaufende Anlagefläche für einen im Querschnitt U-förmigen Profilrahmen des anderen zweiten Balgelements aufweist, wobei der Profilrahmen mit dem Verbindungsrahmen an der Anlagefläche des Verbindungsrahmens verschraubt oder vernietet ist. Hieraus wird deutlich, dass der Kern der Erfindung darin besteht, dass im Gegensatz zum zuvor abgehandelten Stand der Technik der Profilrahmen stirnseitig auf den Verbindungsrahmen aufgelegt wird, um dann die umfangsverteilte Einbringung der entsprechenden Bohrungen für die Schrauben zur Verbindung des U-förmigen Profilrahmens mit dem Verbindungsrahmen auf dem Werkzeugtisch von oben vornehmen zu können. Das heißt, im Gegensatz zum Stand der Technik wird hierbei nicht mehr parallel zur Tischoberseite gebohrt, sondern senkrecht hierzu. Dies bringt nicht nur Vorteile hinsichtlich der Anordnung der Bohrungen an sich mit sich, sondern darüber hinaus erleichtert eine solche Vorgehensweise auch die Fixierung des Profilrahmens auf dem Verbindungsrahmen durch entsprechende Spannmittel auf dem Werkzeugtisch, wenn diese zusammen gebohrt werden. Gleichfalls ist auch die Verschraubung selbst erleichtert, da die Schrauben von oben, also senkrecht zur Werkzeugtischoberseite, eingedreht werden können.

Vorteilhafte Merkmale und Ausgestaltungen zu der Erfindung ergeben sich aus den Unteransprüchen.

Wie bereits ausgeführt, weist die Anlagefläche des Verbindungsrahmens mehrere umfangsverteilt angeordnete Bohrungen zur Aufnahme von Schrauben oder Nieten zur Verbindung mit dem Profilrahmen auf. Um eine sichere Fixierung sowohl des Profilrahmens an dem Verbindungsrahmen als auch des Verbindungsrahmens an der Stirnwand des Fahrzeugs oder Fahrzeugteils zu gewährleisten, ist die umfangsverteilte Anordnung mehrerer Schrauben oder Nieten erforderlich.

Nach einem besonderen Merkmal der Erfindung ist des Weiteren vorgesehen, dass der Verbindungsrahmen auf seiner der Stirnwand des Fahrzeugs oder Fahrzeugteils zugewandten Seite ein Dichtungsprofil, insbesondere ein Doppellippendichtungsprofil aufweist. Bei Verbindung des Verbindungsrahmens mit der Stirnwand des Fahrzeugs wird das Dichtungsprofil gegen die Stirnwand des Fahrzeugs gedrückt, wobei hierdurch verhindert wird, dass Feuchtigkeit in das Innere des Fahrzeugs gelangt.

Des Weiteren ist vorgesehen, dass der Verbindungsrahmen eine umlaufende Dichtungsleiste aufweist, wobei die Dichtungsleiste auf den Verbindungsrahmen aufclipsbar ist. Hierbei besitzt die Dichtungsleiste einen Dichtungskopf und eine Dichtungslasche, die den äußeren Schenkel des im Querschnitt U-Profilrahmens abdeckt, der das andere, zweite Balgelement aufnimmt. Hieraus wird deutlich, dass die Lasche als Teil der Dichtungsleiste nicht nur einen optisch ansprechenden Übergang zwischen dem Balgelement und der Stirnwand des Fahrzeugs bildet, sondern dass hierdurch auch verhindert wird, dass in die maulartige Öffnung, die das andere zweite Balgelement klemmbar aufnimmt, Feuchtigkeit eintritt.

Nach einem weiteren Merkmal der Erfindung ist vorgesehen, dass die Balgelemente des Doppelwellenbalges mit ihren gewölbten Außenflächen voneinander weg zeigen. Hierdurch ergibt sich ein vergrößertes Innenvolumen zwischen den zwei den Doppelwellenbalg bildenden Balgelementen, was sowohl in Bezug auf die Schalldämmung als hinsichtlich der Isolierung Vorteile bringt.

Anhand der Zeichnungen wird sowohl der Stand der Technik als auch die Erfindung nachstehend beispielhaft näher erläutert.
- Figur 1: zeigt im Schnitt den erfindungsgemäßen Doppelwellenbalg, einschließlich Verbindungsrahmen;
- Figur 2: zeigt den Doppelwellenbalg aus dem Stand der Technik mit dem Verbindungsrahmen.

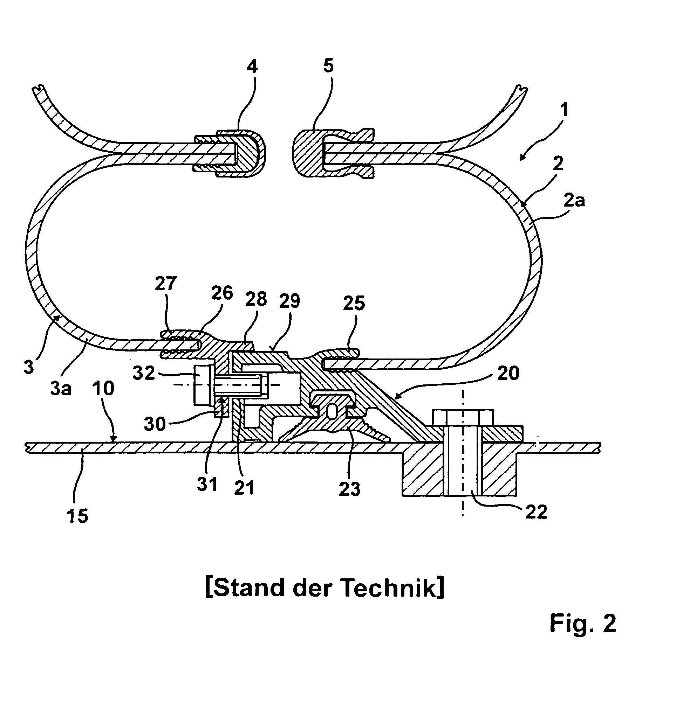

Bei dem Stand der Technik gemäß der Figur 2 besteht der mit 1 bezeichnete Doppelwellenbalg aus den beiden Balgelementen 2 und 3, wobei die beiden Wellenbalgelemente 2 und 3 mit ihren gewölbten Flächen jeweils voneinander weg zeigen, sodass sich durch den Doppelwellenbalg zwischen den beiden Balgelementen ein verhältnismäßig großer Innenraum ergibt, was Vorteile hinsichtlich der Geräuschdämmung und der Isolierung mit sich bringt.

Jedes Balgelement besteht aus einzelnen Wellen 2a, 3a, die im Bereich des Übergangs von einer Welle zur nächsten Welle durch einen im Querschnitt U-förmigen Profilrahmen 4, 5 klemmbar erfasst werden.

An der Stirnwand 10 des Fahrzeugteils 15 liegt der insgesamt mit 20 bezeichnete Verbindungsrahmen an. Der Verbindungsrahmen 20 ist durch Schrauben 22 mit der Stirnwand 10 verschraubt. Der Verbindungsrahmen 20 ist leicht gekröpft ausgebildet und weist auf seiner der Stirnwand 10 zugewandten Seite ein Doppellippendichtungsprofil 23 auf.

Der Verbindungsrahmen 20 zeigt des Weiteren eine maulartige Öffnung 25 zur klemmbaren Aufnahme des einen ersten Wellenbalgelementes 2.

Wie bereits an anderer Stelle erläutert, ist zur Fixierung des anderen zweiten Wellenbalgelementes 3 eine mit 26 bezeichnete Leiste vorgesehen, wobei die Leiste 26 eine ebenfalls maulartige Öffnung 27 zur klemmbaren Erfassung des Wellenbalgelementes 3 aufweist. Die Leiste 26 zeigt des Weiteren einen Anlagesteg 28, wobei der Anlagesteg an der parallel zur Stirnwand 10 verlaufenden Anlagefläche 29 des Verbindungsprofils 20 anliegt. Im Winkel von 90° zu diesem Anlagesteg 28 verläuft ein Befestigungsschenkel 30, der Bohrungen 31 der Aufnahme von Schrauben 32 aufweist. Korrespondierend zu diesen Bohrungen 31, die umlaufend an der Leiste 26 angeordnet sind, besitzt der Verbindungsrahmen 20 ebenfalls auf seiner Stirnseite entsprechende Bohrungen 21, zur Aufnahme der Schrauben 32. Es ist unmittelbar einsichtig, dass die Anbringung der Bohrungen 21 und 31 insofern problematisch ist, als zum einen die Einbringung dieser Bohrungen nach Möglichkeit zusammen erfolgen muss, um das Fluchten der Bohrungen zu gewährleisten, und darüber hinaus, dass die Bohrungen im liegenden Zustand sowohl des Verbindungsprofils als auch der Leiste horizontal in die beiden Bauteile eingebracht werden müssen.

Die zuvor beschriebene Problematik entfällt bei der Erfindung.

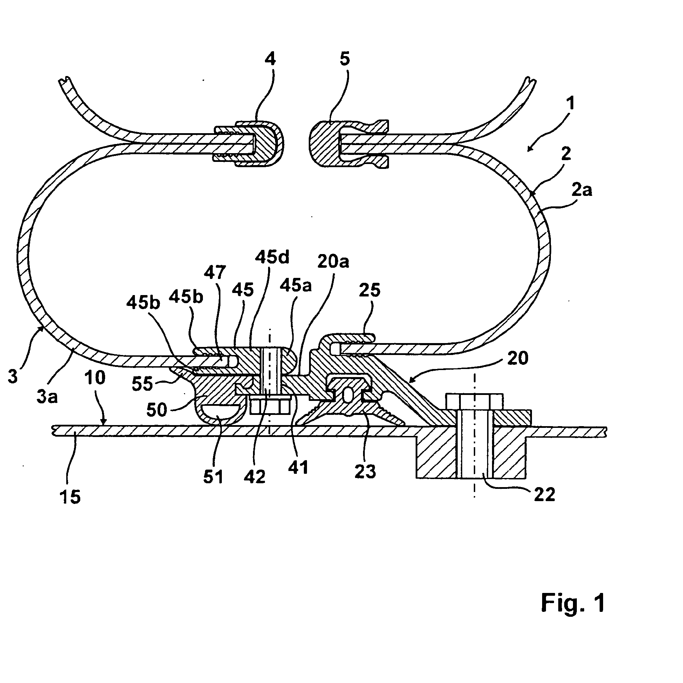

Dies ergibt sich unmittelbar bei Betrachtung von Figur 1, wobei zunächst darauf hingewiesen wird, dass gleiche Bauteile gleich bezeichnet werden. So weist auch hier der Verbindungsrahmen 20 eine maulartige Öffnung 25 zur klemmbaren Erfassung des Wellenbalgelementes 2 auf. Der Verbindungsrahmen 20 ist durch mehrere umlaufend angeordnete Schraube 22 mit der Stirnwand 10 des Fahrzeugteils oder Fahrzeugs 15 verbunden. Gleichfalls vorgesehen ist eine umlaufende Doppellippendichtung 23, die ebenfalls von dem Verbindungsrahmen 20 aufgenommen wird.

Das Wellenbalgelement 3 wird durch den U-förmigen Profilrahmen 45 klemmbar erfasst. Hierzu besitzt der U-förmige Profilrahmen eine maulartige Öffnung 47. Der U-förmige Profilrahmen 45 zeigt zwei Schenkel 45b, die - wie bereits ausgeführt - das Balgelement 3 klemmend erfassen.

Des Weiteren besitzt der U-förmige Profilrahmen 45 im Bereich seines Steges 45d eine Bohrung 45a.

Der Verbindungsrahmen 20 besitzt zur Aufnahme des U-förmigen Profilrahmens 45 eine ebene Anlagefläche 20a, zur Anlage des U-förmigen Profilrahmens 45, wie sich dies unmittelbar in Anschauung von Figur 2 ergibt. Die Anlagefläche 20a verläuft parallel zur Stirnwand 10 des Fahrzeugteils 15 umlaufend der Außenkontur der Stirnwand folgend. Der Verbindungsrahmen 20 zeigt darüber hinaus im Bereich der ebenen Anlagefläche 20a eine Bohrung 41, wobei die Bohrung 41 der Aufnahme der Schraube 42 dient, um somit die Verbindung zwischen Verbindungsrahmen 20 und U-förmigen Profilrahmen 45 zu bewerkstelligen.

Des Weiteren ist eine Dichtungsleiste 50 vorgesehen, die von dem Verbindungsrahmen 20 clipsbar aufnehmbar ist. Die Dichtungsleiste 50 besitzt eine Dichtungslasche 55, die den Schenkel 45b des Profilrahmens 45 abdeckt, und so verhindert, dass Feuchtigkeit in die maulartige Öffnung zur Aufnahme des Balgelementes 3 des U-förmigen Profilrahmens eindringt. Allerdings sorgt die Dichtungsleiste 50 auch für einen optisch gelungenen Übergang von dem Balgelement 3a zu der Stirnwand 10 des Fahrzeugteils 15. Die Dichtungsleiste 50 zeigt darüber hinaus einen Dichtungskopf 51, der ebenfalls an der Stirnwand 10 des Fahrzeugs 15 anliegt. Die Dichtungsleiste 50 wird gehalten durch den Profilrahmen 45 in Verbindung mit dem Verbindungsrahmen 20, wenn der Verbindungsrahmen an der Stirnwand 10 angeschraubt ist.

Im Übergang von dem einen Wellenelement 2a bzw. 3a zum benachbarten Wellenelement sind ebenfalls U-förmige Profilrahmen 4 und 5 vorgesehen.

## Patentansprüche

1. Zwei Balgelemente (2, 3) aufweisender Doppelwellenbalg (1) eines Übergangs zwischen zwei gelenkig miteinander verbundenen Fahrzeugen, umfassend einen Verbindungsrahmen (20) zur Verbindung des Doppelwellenbalges (1) mit der Stirnwand (10) des Fahrzeugs (15), wobei der Verbindungsrahmen (20) eine umlaufende maulartige Öffnung (25) zum klemmbaren Erfassen des einen ersten Balgelements (2) aufweist, wobei der Verbindungsrahmen (20) eine parallel zur Stirnwand (10) des Fahrzeugs (15) verlaufende Anlagefläche (20a) für einen im Querschnitt U-förmigen Profilrahmen (45) zur Aufnahme des anderen, zweiten Balgelements (3) aufweist, wobei der Profilrahmen (45) mit dem Verbindungsrahmen an der Anlagefläche (20a) verschraubt oder vernietet ist.

2. Zwei Balgelemente (2, 3) aufweisender Doppelwellenbalg (1) nach Anspruch 1,
**dadurch gekennzeichnet,**
**dass** die Anlagefläche (20a) des Verbindungsrahmens (20) mehrere umfangsverteilt angeordnete Bohrungen (41) zur Aufnahme von Schrauben (42) oder Nieten zur Verbindung mit dem Profilrahmen (45) aufweist.

3. Zwei Balgelemente (2, 3) aufweisender Doppelwellenbalg (1) nach einem der voranstehenden Ansprüche,
**dadurch gekennzeichnet,**
**dass** der Verbindungsrahmen (20) auf seiner der Stirnwand (10) des Fahrzeugs (15) zugewandten Seite ein umlaufendes Dichtungsprofil (23), insbesondere ein Doppellippendichtungsprofil, aufweist.

4. Zwei Balgelemente (2, 3) aufweisender Doppelwellenbalg (1) nach einem der voranstehenden Ansprüche,
**dadurch gekennzeichnet,**
**dass** der Verbindungsrahmen (20) eine umlaufende Dichtungsleiste (50) aufweist.

5. Zwei Balgelemente (2, 3) aufweisender Doppelwellenbalg (1) nach einem der voranstehenden Ansprüche,
**dadurch gekennzeichnet,**
**dass** die Dichtungsleiste (50) eine Dichtungslasche (55) aufweist, die den einen äußeren Schenkel (45b) des im Querschnitt U-förmigen Profilrahmens (45) abdeckt, der das andere zweite Balgelement (3) aufnimmt.

6. Zwei Balgelemente (2, 3) aufweisender Doppelwellenbalg (1) nach einem der voranstehenden Ansprüche,
**dadurch gekennzeichnet,**
**dass** der Verbindungsrahmen (20) durch umfangsverteilt angeordnete Schrauben (22) mit der Stirnwand (10) des Fahrzeugs (15) verbindbar sind.

7. Zwei Balgelemente (2, 3) aufweisender Doppelwellenbalg (1) nach einem der voranstehenden Ansprüche,
**dadurch gekennzeichnet,**
**dass** die Balgelemente (2, 3) mit ihren gewölbten Außenflächen voneinander weg zeigen.

## Claims

1. A double corrugated bellows (1) of a gangway between two vehicles articulately connected to each other having two bellows elements (2, 3), comprising a connection frame (20) for connecting the double corrugated bellows (1) to the front wall (10) of the vehicle (15), the connection frame (20) having a circumferential jaw-like opening (25) for clampably capturing the one first bellows element (2), the connection frame (20) having an abutment surface (20a) running parallel to the front wall (10) of the vehicle (15) for a profile frame (45) with a U-shaped cross-section for receiving the other, second bellows element (3), the profile frame (45) being screwed or riveted with the connection frame on the abutment surface (20a).

2. The double corrugated bellows (1) having two bellows elements (2, 3) according to claim 1,
**characterized in that**
the abutment surface (20a) of the connection frame (20) has several bores (41) disposed around the circumference for receiving screws (42) or rivets for connection with the profile frame (45).

3. The double corrugated bellows (1) having two bellows elements (2, 3) according to one of the afore-mentioned claims,
**characterized in that**
the connection frame (20) has a circumferential sealing profile (23), more specifically a double-lip seal profile on its side facing the front wall (10) of the vehicle (15).

4. The double corrugated bellows (1) having two bellows elements (2, 3) according to one of the afore-mentioned claims,
**characterized in that**
the connection frame (20) has a circumferential sealing ledge (50).

5. The double corrugated bellows (1) having two bellows elements (2, 3) according to one of the afore-mentioned claims,
**characterized in that**
the sealing ledge (50) has a seal strap (55) that covers the one outer bracket (45b) of the profile frame (45) with a U-shaped cross-section, which receives the other second bellows element (3).

6. The double corrugated bellows (1) having two bellows elements (2, 3) according to one of the afore-mentioned claims,
**characterized in that**
the connection frame (20) is connectable to the front wall (10) of the vehicle (15) by screws (22) distributed around the circumference.

7. The double corrugated bellows (1) having two bellows elements (2, 3) according to one of the afore-mentioned claims,
**characterized in that**
the curved outer surfaces of the bellows element (2, 3) point away from each other.

## Revendications

1. Soufflet d'arbre double (1) comportant deux éléments de soufflet (2,3) pour un passage d' intercommunication entre deux véhicules articulés couplés entre eux, comportant un cadre de liaison (20) pour coupler le soufflet d'arbre double (1) avec la paroi frontale (10) du véhicule (15), dans lequel le cadre de liaison (20) présente une embouchure périphérique (25) pour assurer la fixation par pincement de l'un des éléments de soufflet (2), dans lequel le cadre de liaison (20) comporte une surface d'appui (20a) qui s'étend parallèlement à la paroi frontale (10) du véhicule (15), comprenant un cadre de profilé (45) de section transversale en U, pour fixer le deuxième des éléments de soufflet (3), le cadre de profilé (45) étant boulonné ou riveté au cadre de liaison contre la surface d'appui (20a).

2. Soufflet d'arbre double (1) comportant deux éléments de soufflet (2,3) selon la revendication 1,
**caractérisée en ce que**
la surface d'appui (20a) du cadre de liaison (20) comporte plusieurs alésages (41) répartis sur le pourtour pour recevoir des boulons (42) ou des rivets pour assurer le couplage avec le cadre de profilés (45).

3. Soufflet d'arbre double (1) comportant deux éléments de soufflet (2,3) selon
l'une quelconque des revendications précédentes,
**caractérisée en ce que**
le cadre de liaison (20) comporte sur sa face orientée vers la paroi frontale (10) du véhicule (15) un joint d'étanchéité profilé (23) périphérique, en particulier un joint d'étanchéité ayant un profil à double lèvre.

4. Soufflet d'arbre double (1) comportant deux éléments de soufflet (2,3) selon
l'une quelconque des revendications précédentes,
**caractérisée en ce que**
le cadre de liaison (20) comporte une liste de garniture d'étanchéité périphérique (50).

5. Soufflet d'arbre double (1) comportant deux éléments de soufflet (2,3) selon
l'une quelconque des revendications précédentes,
**caractérisée en ce que**
la liste de garniture d'étanchéité (50) comporte une lèvre (55) qui recouvre l'un des rebords (45b) du cadre de profilé (45) de section transversale en U, qui reçoit le deuxième élément de soufflet (3).

6. Soufflet d'arbre double (1) comportant deux éléments de soufflet (2,3) selon
l'une quelconque des revendications précédentes,
**caractérisée en ce que**
le cadre de liaison (20) est agencé pour être couplé à la paroi frontale (10) du véhicule (15) au moyen de boulons (22) répartis sur le pourtour.

7. Soufflet d'arbre double (1) comportant deux éléments de soufflet (2,3) selon
l'une quelconque des revendications précédentes,
**caractérisée en ce que**
les éléments de soufflet (2, 3) sont opposés l'un par rapport l'autre par leur surface extérieure voûtée.
